# EUROPÄISCHE PATENTSCHRIFT

(11) **EP 3 368 473 B1**
(45) Veröffentlichungstag und Bekanntmachung des Hinweises auf die Patenterteilung: **17.06.2020**
(21) Anmeldenummer: 16787447.8
(22) Anmeldetag: 26.10.2016
(51) Int. Cl.: C01B 3/34, B01J 19/08

(54) **VORRICHTUNG UND VERFAHREN ZUM ERZEUGEN VON SYNTHESEGAS**
APPARATUS AND PROCESS FOR PRODUCTION OF SYNTHESIS GAS
DISPOSITIF ET PROCÉDÉ POUR PRODUIRE UN GAZ DE SYNTHÈSE

(30) Priorität: 30.10.2015 DE 102015014007
(43) Veröffentlichungstag der Anmeldung: 05.09.2018
(73) Patentinhaber: Caphenia GmbH, 83233 Bernau a. Chiemsee (DE)
(72) Erfinder: KÜHL, Olaf, 17489 Greifswald (DE)
(74) Vertreter: Carstens, Dirk Wilhelm
(86) Internationale Anmeldenummer: PCT/EP2016/075815
(87) Internationale Veröffentlichungsnummer: WO 2017/072181

(56) Entgegenhaltungen:
- WO-A1-2015/173360
- WO-A2-03/051767
- DE-A1- 3 606 108
- KR-B1- 101 557 690
- KERKER L: "Herstellung von Reduktionsgas oder Synthesegas mit Lichtbogenplasmaverfahren", ELEKTROWARME INTERNATIONAL. EDITION B, VULKAN VERLAG. ESSEN, DE, Bd. 45, Nr. B3/4, 1. Juni 1987 (1987-06-01), Seiten B155-B161, XP002040591, ISSN: 0340-3521

## Beschreibung

Die vorliegende Erfindung bezieht sich auf eine Vorrichtung und ein Verfahren zum Erzeugen von Synthesegas.

### Hintergrund

Aus WO/2013/091878 ist ein Verfahren zur Herstellung von synthetischen funktionalisierten und/oder nicht-funktionalisierten Kohlenwasserstoffen bekannt, welches das Aufspalten eines kohlenwasserstoffhaltigen Fluids zu einem H₂/C-Aerosol aus Kohlenstoff C und Wasserstoff H₂ in einem Kohlenwasserstoffkonverter, das Leiten von wenigstens einem Teil des Aerosols von dem Kohlenwasserstoffkonverter in einen C-Konverter sowie das Einleiten von CO₂, beispielsweise aus einem Industrieprozess, in den C-Konverter aufweist. In dem C-Konverter wird das CO₂-Gas mit dem H₂/C-Aerosol vermischt, wobei bei einer hohen Temperatur das CO₂-Gas und der Kohlenstoff in Kohlenmonoxid CO umgewandelt werden. Die Temperatur am Ausgang des C-Konverters liegt bei 800 bis 1000°C. Das Kohlenmonoxid und der Wasserstoff werden in einem CO-Konverter mittels eines Katalysators in synthetische Kohlenwasserstoffe umgewandelt.

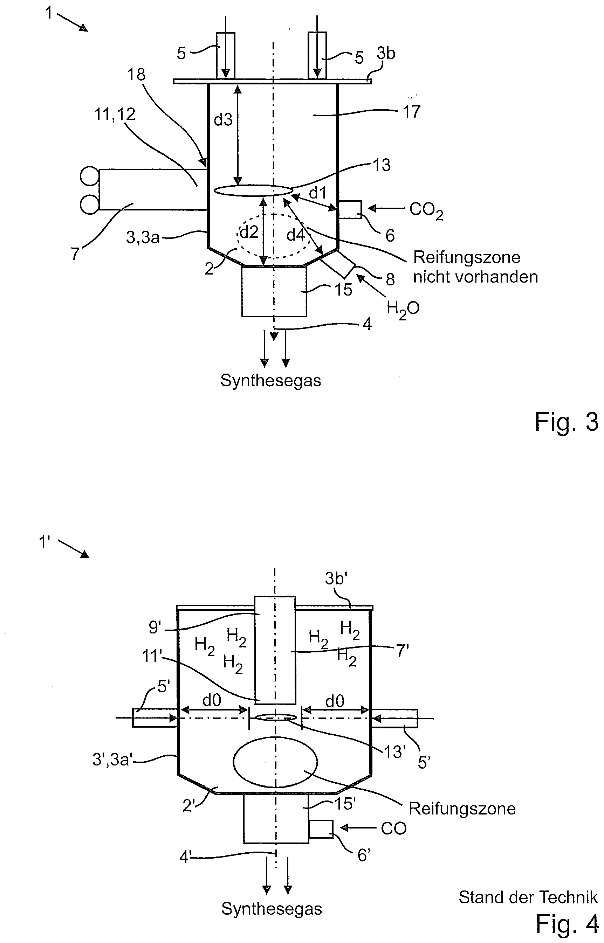

In Fig. 4 ist ein bekannter Plasmareaktor 1' (Kvaerner-Reaktor) gezeigt, der in den 1990er Jahren als Versuchsreaktor zur Herstellung von Kohlenstoffpartikeln eingesetzt wurde und zum Aufspalten eines kohlenwasserstoffhaltigen Fluids zu einem H₂/C-Aerosol geeignet ist. Der Plasmareaktor 1' wurde im Probebetrieb auch zur Herstellung von Synthesegas verwendet. Der bekannte Plasmareaktor 1' weist eine Reaktorkammer 2' auf, die von einer Reaktorwand 3' umschlossen ist, welche einen Unterteil 3a' und einen Deckel 3b' aufweist. Die Reaktorkammer 2' ist im wesentlichen zylinderförmig und hat eine Mittelachse 4'. An der zylindrischen Außenwand sind mehrere Einlässe 5' vorgesehen, durch welche in radialer Richtung ein Kohlenwasserstoff-Fluid und Methan eingeleitet wurden. Am Deckel 3b' der Reaktorwand 3' ist ein Plasmabrenner 7' befestigt, der langgestreckte Elektroden aufweist. Der Plasmabrenner 7' weist einen Basisteil 9' auf, der an dem Deckel 3b' der Reaktorwand 3' befestigt ist. Der Plasmabrenner 7' weist an seinem anderen Ende gegenüberliegend zum Basisteil 9' einen Brennerteil 1 1' auf, der in die Reaktorkammer 2' ragt. Am anderen Ende der Reaktorkammer 2' gegenüberliegend zum Plasmabrenner 7' weist der Plasmareaktor 1' einen Auslass 15' auf, durch den die Stoffe austreten können, die aus der Aufspaltung des eingeleiteten Kohlenwasserstoff-Fluids resultieren. Im Betrieb des bekannten Plasmareaktors 1' wird ein Plasma 13' in der Nähe des Brennerteils 11' gebildet. Ein Kohlenwasserstoff-Fluid und Methan wird über die Einlässe 5' in Richtung des Plasmas 13' eingeleitet. Bei Betriebstemperaturen von bis zu 3500°C werden das Kohlenwasserstoff-Fluid und das Methan in Synthesegas umgewandelt. Ein Teil des Wasserstoffes sammelt sich im oberen Teil der Reaktorkammer 2'. Der Rest des Wasserstoffes tritt zusammen mit Kohlenmonoxid als Synthesegas aus dem Auslass 15' aus. Im Bereich zwischen dem Plasmabrenner 7' und dem Auslass 15' befindet sich eine Reifungszone, in der die C-Partikel geformt werden. In der oben erwähnten Vorrichtung aus WO/2013/091878 wird in einer Ausführungsform ein solcher Plasmareaktor 1' zum Aufspalten des kohlenwasserstoffhaltigen Fluids (Kohlenwasserstoff-Fluid) zu H₂/C-Aerosol verwendet. Das H₂/C-Aerosol wird dann in einem Auslassrohr des Plasmareaktors 1', d.h. dem Auslass 15') mit CO₂ vermischt, wobei CO entsteht.

Bei dem bekannten Plasmareaktor wurden folgende Probleme festgestellt. In der Reaktorkammer 2' und an den Kohlenwasserstoff-Fluid-Einlässen 5' wuchsen Kohlenstoffablagerungen auf (Fouling). Der Teil des Wasserstoffes, der sich im oberen Teil der Reaktorkammer 2' sammelt, verursacht eine starke Aufheizung. Das erzeugte Synthesegas hatte am Ausgang eine Temperatur zwischen 1000 und 1300°C, was einen großen Energieverlust verursachte und das bekannte Verfahren unwirtschaftlich machte.

Weiter beschreibt DE 36 06 108 A1 eine Vorrichtung für Dampfreformation, bei der gasförmiger Kohlenwasserstoff (Kohlenwasserstoff-Fluid) und H₂O in einen Reaktorraum eingeblasen werden. WO 2015/173360 A1 beschreibt eine Vorrichtung und ein Verfahren bei dem ein Kohlenwasserstoff-Fluid thermisch zersetzt wird. Das aus der thermischen Zersetzung resultierende Gemisch aus Kohlenstoffpartikeln und Wasserstoff wird mit H₂O vermischt.
KR 101 557 690 B1 beschreibt ebenfalls eine Vorrichtung und ein Verfahren für Dampfreformation, bei der gasförmiger Kohlenwasserstoff und H₂O in einen Reaktorraum eingeleitet werden. WO 03/051767 A2 beschreibt einen Plasmabrenner für die Dampfreformation, der außerhalb eines Reaktorraums angeordnet ist.

Die Aufgabe der vorliegenden Erfindung liegt darin, eine Vorrichtung zur Erzeugung von Synthesegas mit hoher Kapazität zu schaffen, insbesondere durch schnelle Umwandlung und langen unterbrechungsfreien Betrieb.

### Zusammenfassung der Erfindung

Diese Aufgabe wird durch eine Vorrichtung zur Erzeugung von Synthesegas nach Anspruch 1 und durch ein Verfahren nach Anspruch 9 gelöst.

Insbesondere wird die Aufgabe gelöst durch eine Vorrichtung zur Erzeugung von Synthesegas, die einen Reaktor mit einer Reaktorkammer aufweist, die wenigstens einen ersten Einlass in Verbindung mit einer Quelle für Kohlenwasserstoff-Fluid und wenigstens einen Auslass aufweist. Die Vorrichtung weist auch einen Plasmabrenner mit einem Brennerteil auf, der zum Erzeugen eines Plasmas ausgebildet ist. In die Reaktorkammer mündet auch wenigstens ein zweiter Einlass in Verbindung mit einer Quelle für CO₂ oder H₂O. Die Reaktorkammer definiert einen Strömungsweg vom ersten Einlass zum Auslass, wobei der Brennerteil bezüglich des Strömungswegs zwischen dem ersten Einlass für Kohlenwasserstoff-Fluid und dem zweiten Einlass für CO₂ oder H₂O angeordnet ist, und wobei der zweite Einlass für CO₂ oder H₂O bezüglich des Strömungswegs so angeordnet ist, dass er sich an einem Ort befindet, an dem zwischen 90% und 95% des Kohlenwasserstoff-Fluids thermisch zersetzt sind. Mit dieser Vorrichtung kann eine schnelle Umwandlung in Synthesegas und verringerte Reaktionszeiten erreicht werden, da ein stabiles Aerosol mit sehr kleinen leicht schwebenden C-Partikeln vorliegt.

Insbesondere mündet der zweite Einlass näher am Brennerteil als am Auslass in die Reaktorkammer. Dadurch hat eine Umwandlungsreaktion von C und CO₂ zu CO ausreichend Zeit.

In einer Ausführung ist der zweite Einlass gegen die Richtung des Strömungswegs ausgerichtet und weist zum ersten Einlass hin. Dadurch wird eine bessere Vermischung des durch den zweiten Einlass eingeleiteten Gases mit den C-Partikeln erreicht und Kohlenstoffablagerungen werden verringert.

Vorzugsweise weist die Vorrichtung einen dritten Einlass auf, der bezüglich des Strömungswegs weiter vom Brennerteil entfernt ist als der zweite Einlass. Dadurch können im Betrieb unterschiedliche Gase in der Nähe und in weiterer Entfernung vom Brennerteil eingeleitet werden, und die Erzeugung von Synthesegas kann besser gesteuert werden. Dabei ist es besonders vorteilhaft, wenn der zweite Einlass mit einer Quelle für CO₂ verbunden ist und der dritte Einlass mit einer Quelle für H₂O verbunden ist. Im Vergleich zum Stand der Technik ist es daher möglich, eine geringere Temperatur des erzeugten Synthesegases am Ausgang der Vorrichtung zu erreichen. Um die Steuerung der Vorrichtung weiter zu erleichtern, kann sich in diesem Fall zwischen dem wenigstens einen zweiten Einlass und dem wenigstens einen dritten Einlass ein Heizelement befinden. Dadurch kann die Vorrichtung kinetisch und thermodynamisch gesteuert werden.

In einer Ausführung der Vorrichtung weist der Brennerteil einen Plasmagaseinlass in Verbindung mit einer Quelle für Plasmagas und einen Plasmagasauslass auf, wobei der Plasmagasauslass in die Reaktorkammer mündet. Dabei ist der Einlass für Kohlenwasserstoff-Fluid so zum Einlass für Plasmagas angeordnet, dass sich das Kohlenwasserstoff-Fluid und das Plasmagas beim Eintritt in die Reaktionskammer innig miteinander vermischen.

In einer Ausführung der Vorrichtung weist der Plasmabrenner wenigstens zwei langgestreckte Elektroden auf, die jeweils an einem Ende einen Basisteil aufweisen, der an der Reaktorwand befestigt ist. Dabei ist der Brennerteil an dem zum Basisteil entgegengesetzten Ende angeordnet und ragt in die Reaktorkammer. In dieser Ausführung wird die Reaktorwand durch vorbeiströmendes Kohlenwasserstoff-Fluid vor der Hitze des Plasmas geschützt. In einer alternativen Ausführung der Vorrichtung ist der Plasmabrenner außerhalb der Reaktorkammer angeordnet und ist über eine Öffnung in der Reaktorwand mit der Reaktorkammer verbunden. Dabei ist der Brennerteil so zu der Öffnung hin ausgerichtet, dass das Plasmagas in die Reaktionskammer geleitet wird. Diese Ausführung bietet mehr Freiheit bei der Konstruktion des Plasmabrenners.

Weiter wird die Aufgabe gelöst durch ein Verfahren zum Erzeugen von Synthesegas, das folgende Schritte aufweist: Einleiten eines Kohlenwasserstoff-Fluids in eine Reaktorkammer, die wenigstens einen ersten Einlass für Kohlenwasserstoff-Fluid und wenigstens einen Auslass aufweist; Erzeugen einer Fluidströmung vom Einlass zum Auslass; Aufspalten des Kohlenwasserstoff-Fluids in Kohlenstoffpartikel und Wasserstoff mit Hilfe eines Plasmabrenners, der zwischen dem Einlass und dem Auslass liegt; und Vermischen der Kohlenstoffpartikel und des Wasserstoffes mit CO₂ oder H₂O in einem Bereich in der Reaktorkammer wo zwischen 90% und 95% des Kohlenwasserstoff-Fluids thermisch zersetzt sind. Mit diesem Verfahren können eine schnelle Umwandlung in Synthesegas und verringerte Reaktionszeiten erreicht werden, da ein stabiles Aerosol mit sehr kleinen leicht schwebenden C-Partikeln vorliegt.

Insbesondere erfolgt der Schritt des Vermischens mit CO₂ oder H₂O in Richtung der Fluidströmung nach dem Plasmabrenner in einem Bereich der Reaktorkammer wo die Kohlenstoffpartikel eine Größe von kleiner gleich 250 nm und vorzugsweise von kleiner gleich 100 nm haben. Dadurch bleibt das Aerosol auch bei starken Temperaturverringerungen stabil, welche durch die Umwandlungsreaktionen der C-Partikel mit CO₂ oder H₂O auftreten.

Alternativ oder zusätzlich sieht das Verfahren den Schritt des Vermischens mit CO₂ oder H₂O in einem Bereich der Reaktorkammer bezüglich der Fluidströmung nach dem Plasmabrenner vor, wo eine Temperatur von 1550 bis 1800°C herrscht. Wenn dieser Schritt alternativ vorgesehen wird, wird die Steuerung des Verfahrens einfacher. Wenn dieser Schritt zusätzlich vorgesehen wird, wird die Steuerung des Verfahrens genauer.

Vorzugsweise erfolgen bei dem Verfahren die Schritte des Vermischens mit CO₂ und des Vermischens mit H₂O getrennt voneinander und in Richtung der Fluidströmung hintereinander. Im Vergleich zum Stand der Technik wird dadurch eine geringere Temperatur des erzeugten Synthesegases am Ausgang der Vorrichtung möglich, was Energieeinsparungen mit sich bringt. Insbesondere werden die Kohlenstoffpartikel und der Wasserstoff bezüglich der Fluidströmung näher am Plasmabrenner mit CO₂ vermischt und bezüglich der Fluidströmung weiter entfernt mit H₂O vermischt.

Für eine beschleunigte Reaktion und erhöhten Durchsatz wird der Druck im Reaktorraum auf 10 bis 25 bar eingestellt.

Das Verfahren wird bevorzugt so durchgeführt, dass das Synthesegas im Bereich des Auslasses einen Anteil von restlichem oder nicht zersetztem Kohlenwasserstoff-Fluid im Bereich von 1,25 bis 2,5 mol% aufweist. Dadurch wird der Messvorgang erleichtert. Eine Messung ist wegen der hohen Temperaturen von über 1000°C in der Nähe der thermischen Zersetzung des Kohlenwasserstoff-Fluids nur schwer möglich.

Die Erfindung sowie weitere Einzelheiten und Vorteile derselben wird bzw. werden nachfolgend an bevorzugten Ausführungsbeispielen unter Bezugnahme auf die Figuren erläutert.
- Fig. 1: zeigt eine Vorrichtung zum Erzeugen von Synthesegas gemäß der vorliegenden Offenbarung gemäß einer ersten Ausführung.
- Fig. 2: zeigt eine Vorrichtung zum Erzeugen von Synthesegas gemäß der vorliegenden Offenbarung gemäß einer zweiten Ausführung.
- Fig. 3: zeigt eine Vorrichtung zum Erzeugen von Synthesegas gemäß der vorliegenden Offenbarung gemäß einer dritten Ausführung.
- Fig. 4: zeigt einen Plasmareaktor zum Aufspalten eines Kohlenwasserstoff-Fluids gemäß dem Stand der Technik.

In der folgenden Beschreibung beziehen sich die Ausdrücke oben, unten, rechts und links sowie ähnliche Angaben auf die in den Figuren dargestellten Ausrichtungen bzw. Anordnungen und dienen nur zur Beschreibung der Ausführungsbeispiele. Diese Ausdrücke können bevorzugte Anordnungen zeigen, sind jedoch nicht im einschränkenden Sinne zu verstehen. Der Ausdruck Kohlenwasserstoff-Fluid meint im Kontext dieser Beschreibung ein Kohlenwasserstoffe enthaltendes Fluid (Gas, Aerosol, Flüssigkeit).

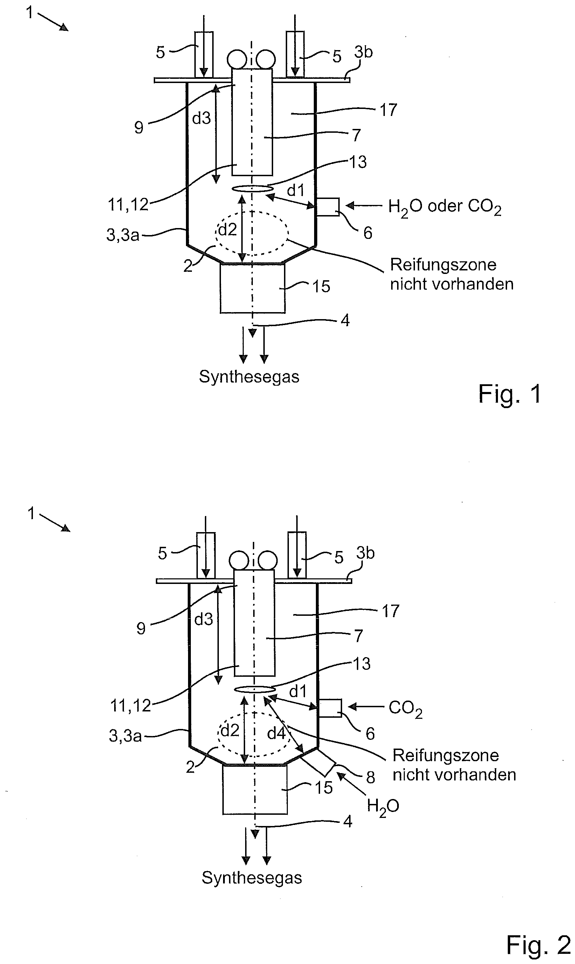

Fig. 1 zeigt eine Vorrichtung zum Erzeugen von Synthesegas gemäß der vorliegenden Offenbarung, die einen Plasmareaktor 1 und in den Fig. nicht näher gezeigte Quellen für Kohlenwasserstoff-Fluid, für Plasmagas, für CO₂ oder H₂O aufweist. Die Quellen weisen beispielsweise Leitungen, Vorratsbehälter oder andere Industrieanlagen auf.

Der Plasmareaktor 1 weist eine Reaktorkammer 2 auf, die von einer Reaktorwand 3 umschlossen ist, welche einen Unterteil 3a und einen Deckel 3b aufweist. Die Reaktorkammer 2 kann auch an einer anderen Stelle geteilt sein, als in den Figuren gezeigt. Die Reaktorkammer 2 ist im Wesentlichen zylinderförmig und hat eine Mittelachse 4. Am Deckel 3b der Reaktorwand 3 ist ein Plasmabrenner 7 befestigt, der (nicht näher gezeigte) langgestreckte Elektroden aufweist. Der Plasmabrenner 7 weist einen Basisteil 9 auf, der an der Reaktorwand 3 befestigt ist (hier insbesondere am Deckel 3b). Der Plasmabrenner 7 weist an seinem anderen Ende gegenüberliegend zum Basisteil 9 einen Brennerteil 11 auf, der in die Reaktorkammer 2 ragt und an einem freien Ende 12 der Elektroden liegt. Zwischen den Elektroden wird ein Plasma 13 gebildet. Am anderen Ende der Reaktorkammer 2 gegenüberliegend zum Plasmabrenner 7 weist der Plasmareaktor 1 einen Auslass 15 auf, durch den die Stoffe austreten können, die in der Reaktorkammer 2 erzeugt werden. Der Auslass 15 ist in Flussrichtung am entgegengesetzten Ende der Reaktorkammer 2 angeordnet.

Der Plasmareaktor 1 weist einen oder mehrere erste Einlässe 5 für Kohlenwasserstoff-Fluid auf, die in der Nähe des Basisteils 9 des Plasmabrenners 7 angeordnet sind. Die ersten Einlässe 5 münden derart in die Reaktorkammer 2, dass im Betrieb ein daraus ausströmendes Kohlenwasserstoff-Fluid in einen Freiraum 17 zwischen der Reaktorwand 3 und den Elektroden des Plasmabrenners 7 in Richtung zum Brennerteil 11 strömt. In den Figuren hat die Mittelachse 4 eine Pfeilspitze und deutet diese Strömungsrichtung an. Die Reaktorkammer 2 definiert einen Strömungsweg von den ersten Einlässen 5 zum Auslass 15.

In der Ausführung der Fig. 1 weist der Plasmareaktor 1 weiter einen oder mehrere zweite Einlässe 6 für CO₂ oder H₂O auf, die näher zum Brennerteil 11 als zum Auslass 15 in die Reaktorkammer 2 münden (in Fig. 1 und 2: Entfernung d1 < d2). Die zweiten Einlässe 6 sind näher am Brennerteil 11 angeordnet als die ersten Einlässe 5 (in Fig. 1 und 2: Entfernung d1 < d3). Die zweiten Einlässe 6 leiten im Betrieb CO₂ oder H₂O zu einer Stelle in der Reaktorkammer, an der zwischen 90% und 95% des Kohlenwasserstoff-Fluids in Wasserstoff und C-Partikel zersetzt sind. Der oder die zweiten Einlässe 6 können im rechten Winkel (wie in Fig. 1 und 2 gezeigt) oder gegen die Richtung des Strömungsweges ausgerichtet sein, das heißt in den Figuren zu den ersten Einlässen 5 hin nach oben.

In der Ausführung der Fig. 2 weist der Plasmareaktor 1 zusätzlich einen oder mehrere dritte Einlässe 8 auf, die entlang des Strömungsweges weiter vom Brennerteil 11 entfernt sind als die zweiten Einlässe 5 (in Fig. 2: Entfernung d1 < d4 < d2). In Fig. 2 sind die zweiten Einlässe 6 mit einer Quelle für CO₂ verbunden, und die dritten Einlässe 8 sind mit einer Quelle für H₂O verbunden. Optional befindet sich zwischen den zweiten Einlässen 6 und den dritten Einlässen 8 ein Heizelement oder Wärmetauscher zum Beheizen der Reaktorkammer 2.

Die in Fig. 3 gezeigte Vorrichtung entspricht der Ausführung der Fig. 2, weist aber eine andere Konstruktion des Plasmabrenners 7 auf. In Fig. 3 ist der Plasmabrenner 7 außerhalb der Reaktorkammer 2 angeordnet und ist über eine Öffnung 18 in der Reaktorwand 3 mit der Reaktorkammer 2 verbunden. Dabei ist der Brennerteil 11 so zu der Öffnung 18 hin ausgerichtet, dass heißes Plasmagas in die Reaktionskammer 2 geleitet wird.

Die in den Figuren nicht näher gezeigten Elektroden sind beispielsweise ineinander angeordnete rohrförmige Elektroden oder Rohr-Elektroden, wie sie beispielsweise aus US 5 481 080 A bekannt sind (siehe oben). Im Fall von Rohr-Elektroden strömt das eingeleitete Kohlenwasserstoff-Fluid entlang einer Elektrode, nämlich entlang der äußeren Elektrode. Die ersten Einlässe 5 sind bei Rohr-Elektroden in Radialrichtung außerhalb der äußeren rohrförmigen Elektrode angeordnet. Es ist aber auch denkbar, dass Stab-Elektroden verwendet werden, beispielsweise zwei oder mehr nebeneinander angeordnete Stab-Elektroden. Im Fall von Stab-Elektroden strömt das Kohlenwasserstoff-Fluid entlang zwei oder mehr Elektroden in Richtung ihres freien Endes. Somit strömt das Kohlenwasserstoff-Fluid bei jeder Bauart des Plasmareaktors 1 in den Raum 17 entlang wenigstens einer Elektrode zwischen der Reaktorkammer 2 und dem Plasmabrenner 7. Der Plasmabrenner 7 hat einen Einlass für Plasmagas und einen Auslass für Plasmagas, der in der Nähe des Brennerteils 11 in die Reaktorkammer 2 mündet. Optional ist wenigstens einer der ersten Einlässe 5 so zum Einlass für Plasmagas angeordnet, dass sich das Kohlenwasserstoff-Fluid und das Plasmagas beim Eintritt in die Reaktionskammer 2 innig miteinander vermischen.

Zwischen den Elektroden wird der Plasma-Lichtbogen 13 gebildet, vorzugsweise mit CO, H₂ oder Synthesegas als Plasmagas, da diese Gase bei der hier beschriebenen Vorrichtung und dem Verfahren sowieso erzeugt werden. Als Plasmagas kann aber auch jedes andere geeignete Gas ausgewählt werden, beispielsweise inerte Gase wie Argon oder Stickstoff, die nicht die Reaktion bzw. Aufspaltung im Plasma-Lichtbogen beeinflussen oder daran teilnehmen. Der Einlass für Plasmagas ist mit einer Quelle für Plasmagas verbunden, z.B. mit einem Vorratsbehälter. Die Quelle für Plasmagas kann aber auch der Ausgang 15 sein, falls Synthesegas als Plasmagas verwendet wird. Falls CO oder H₂ als Plasmagas verwendet werden, können diese Gase aus der Reaktorkammer 2 an einer geeigneten Stelle abgeleitet werden oder aus dem Synthesegas vom Ausgang 15 abgeschieden werden.

Am Plasmareaktor 1 können auch ein oder mehrere Sensoren vorgesehen sein, um die Betriebsparameter abzufühlen (nicht in den Figuren gezeigt). Mit Hilfe von Drucksensoren kann der Druck in der Reaktorkammer 2, an den Einlässen 5, 6, 8, am Auslass 15 und in den Quellen für Plasmagas, Kohlenwasserstoff-Fluid, CO₂ und H₂O gemessen werden. Mit Hilfe von Temperatursensoren kann die Temperatur der eingeleiteten Stoffe, der ausgeleiteten Stoffe und an verschiedenen Stellen in der Reaktorkammer 2 gemessen werden. Mit Hilfe von Gassensoren kann die Zusammensetzung der eingeleiteten Stoffe und des erzeugten Synthesegases gemessen werden.

Eine einfache Steuerung der Einleitung von CO₂ und H₂O wird durch eine Messung der Zusammensetzung des erzeugten Synthesegases ermöglicht. Die Anzahl, Größe, Position und Ausrichtung der Einlässe 6 relativ zum Brennerteil 11 und die Betriebsparameter für die Einleitung von CO₂ oder H₂O, wie beispielsweise Druck und eingeleitete Menge pro Zeit, werden gemäß einem Ausführungsbeispiel abhängig von einem Anteil von restlichem oder nicht zersetztem Kohlenwasserstoff-Fluid im Synthesegas im Bereich des Auslasses 15 gewählt. Insbesondere werden die Anordnung der Einlässe 6 und die Betriebsparameter so gewählt, dass das Synthesegas einen Anteil von restlichem oder nicht zersetztem Kohlenwasserstoff-Fluid im Bereich von 1,25 bis 2,5 mol% aufweist. Dieses Vorgehen steht im Gegensatz zum Stand der Technik, wo kein restliches oder unzersetztes Kohlenwasserstoff-Fluid im Synthesegas erwünscht ist. Alternativ werden die Anordnung der Einlässe 6 und die Betriebsparameter so gewählt, dass CO₂ oder H₂O in einem Bereich der Reaktorkammer 2 erfolgt wo eine Temperatur von 1550 bis 1800°C herrscht. Die Einlässe 6 sind bezüglich der Fluidströmung nach dem Brennerteil 11 des Plasmabrenners 7 gelegen.

Im Betrieb der Vorrichtung zur Erzeugung von Synthesegas wird im Plasmareaktor 1 zwischen den Elektroden ein Plasma 13 in der Nähe des Brennerteils 11 gebildet. Das Plasma 13 hat üblicherweise Temperaturen zwischen 5000°C und 10000°C. Die Wärme wird überwiegend durch Strahlung auf die im Reaktor befindlichen Medien (Gase) übertragen. Ein Kohlenwasserstoff-Fluid (vorzugsweise Methan oder Erdgas) wird unter Sauerstoffabschluss über die ersten Einlässe 5 für Kohlenwasserstoff-Fluid in Richtung des Plasmas 13 in die Reaktorkammer 2 eingeleitet. Bei den Vorrichtungen gemäß Fig. 2 und 3 fließt das Kohlenwasserstoff-Fluid am Plasmabrenner 7 entlang. Bei der Vorrichtung gemäß Fig. 3 fließt das Kohlenwasserstoff-Fluid nicht am Plasmabrenner 7 entlang, sondern heißes Plasmagas wird durch die Öffnung 18 in die Reaktorkammer 2 eingeleitet, wobei das Kohlenwasserstoff-Fluid an dem Plasma 13 vorbeifließt. Katalysatoren sind nicht vorgesehen. Das Kohlenwasserstoff-Fluid wird im Betrieb so eingeleitet, dass sich in der Reaktorkammer 2 eine Fluidströmung mit hoher Raumgeschwindigkeit (Einheit 1/h; Volumenstrom m³/h des Kohlenwasserstoff-Fluids bezogen auf das Volumen m³ der Reaktorkammer 2) erreicht wird. Insbesondere wird eine Raumgeschwindigkeit von 500 - 1000 1/h in Betracht gezogen. Durch die hohe Raumgeschwindigkeit und damit hohe Strömungsgeschwindigkeit der durchgeleiteten Stoffe wird die Gefahr von Ablagerungen von Feststoffen an den ersten Einlässen 5 und in deren Nähe verringert. Durch Anordnung der ersten Einlasse 5 wird eine Fluidströmung zum Auslass 15 am entgegengesetzten Ende der Reaktorkammer 2 erzeugt, was auch vermeidet, dass sich in dem Freiraum 17 heiße Stoffe sammeln und Probleme im Betrieb hervorrufen.

Sobald das Kohlenwasserstoff-Fluid in einen Bereich in der Nähe des Plasmas 13 gelangt, wo eine Zersetzungstemperatur herrscht, werden die im Kohlenwasserstoff-Fluid enthaltenen Kohlenwasserstoffe in C-Partikel und gasförmigen Wasserstoff H₂ aufgespaltet. Beispielsweise zerfällt das Kohlenwasserstoff-Fluid CH₄ in C und 2 H₂. Die Zersetzungstemperatur hängt von den eingeleiteten Kohlenwasserstoffen ab und liegt für Erdgas oder CH₄ beispielsweise bei mehr als 600°C. Der Wasserstoff H₂ und die C-Partikel treten in Richtung der Fluidströmung nach dem Brennerteil 11 des Plasmabrenners 7 als H₂/C-Aerosol auf. Das H₂/C-Aerosol wird mit CO₂ oder H₂O aus den zweiten Einlässen 6 in einem Bereich in der Reaktorkammer 2 vermischt, wo zwischen 90% und 95% des Kohlenwasserstoff-Fluids thermisch zersetzt sind. Dieser Bereich liegt nahe am Brennerteil 11, so dass die beim Stand der Technik vorgesehene Reifungszone hier nicht vorhanden ist. Nahe dem Brennerteil 11 herrscht eine hohe Temperatur von 800 bis 3000°C in der Reaktorkammer 2. Wenn CO₂ durch die zweiten Einlässe 6 eingeleitet wird, werden die C-Partikel in diesem Temperaturbereich gemäß der Gleichung C + CO₂ -> 2 CO umgewandelt. Wenn H₂O durch die zweiten Einlässe 6 eingeleitet wird, werden die C-Partikel in diesem Temperaturbereich gemäß der Gleichung C + H₂O -> CO + H₂ umgewandelt. Die hier genannten Reaktionen laufen ohne Katalysatoren ab.

Die oben genannten Umwandlungsreaktionen laufen schnell und vollständig ab, wenn kleine C-Partikel mit CO₂ oder H₂O vermischt werden. Mit dem in Fig. 4 gezeigten Plasmareaktor 1' des Standes der Technik konnten schon C-Partikel mit einer Größe von ungefähr 350 nm erzeugt werden. Aus dem Stand der Technik war jedoch nicht bekannt, wie noch kleinere C-Partikel erzeugt werden können. Die Erfinder haben herausgefunden, dass sehr kleine C-Partikel mit einer Größe von kleiner gleich 250 nm bis 100 nm in einem Bereich in der Reaktorkammer 2 vorliegen, wo zwischen 90% und 95% des Kohlenwasserstoff-Fluids thermisch zersetzt sind. Daher wird bei der vorliegenden Vorrichtung und dem Verfahren CO₂ oder H₂O in diesem Bereich eingeleitet, um hohe Reaktionsgeschwindigkeiten zu erreichen.

Der Fachmann kann die Einleitung von CO₂ oder H₂O gemäß einer Ausführung der Erfindung abhängig von einem Anteil von restlichem oder nicht zersetztem Kohlenwasserstoff-Fluid im Synthesegas im Bereich des Auslasses 15 bestimmen. Die Einleitung von CO₂ oder H₂O hängt von der Anzahl, Größe, Position und Ausrichtung der zweiten Einlässe 6 relativ zum Brennerteil 11 und von den Betriebsparametern Druck und eingeleitete Masse pro Zeit für die Einleitung ab. Insbesondere werden die Anordnung der Einlässe 6 und die Betriebsparameter so gewählt, dass das Synthesegas einen Anteil von restlichem oder nicht zersetztem Kohlenwasserstoff-Fluid im Bereich von 1,25 bis 2,5 mol% aufweist. Dieses Vorgehen steht im Gegensatz zum Stand der Technik, wo kein restliches oder unzersetztes Kohlenwasserstoff-Fluid im Synthesegas vorhanden ist. Alternativ wählt der Fachmann die Anordnung der Einlässe 6 und die Betriebsparameter so, dass die Einleitung von CO₂ oder H₂O in einem Bereich der Reaktorkammer 2 erfolgt wo eine Temperatur von 1550 bis 1800°C herrscht, wie durch einen Temperatursensor oder ein anderes Hochtemperaturmessverfahren gemessen. Die C-Partikel haben im Bereich der Einleitung von CO₂ oder H₂O eine Größe von kleiner gleich 250 nm, vorzugsweise kleiner gleich 200 nm und insbesondere vorzugsweise von kleiner gleich 100 nm, was zu einer schnellen Umwandlungsreaktion und stabilem Aerosol führt. Betriebsstörungen und Ablagerungen (Fouling) können vermieden werden.

Beim Betrieb der Vorrichtung aus Fig. 1, welche die dritten Einlässe 8 nicht aufweist, wird CO₂ oder H₂O durch die zweiten Einlässe 6 eingeleitet. Vorzugsweise wird CO₂ eingeleitet. Bei der Einleitung von 1 Mol CH₄ entstehen durch die Aufspaltung mit Hilfe des Plasmas 1 Mol C und 2 Mol H₂. Das 1 Mol C und 1 Mol CO₂ werden zu 2 Mol CO umgewandelt. In diesem Fall werden 4 Mol Synthesegas aus 1 Mol CH₄ erzeugt. Wenn beispielsweise 10% des eingeleiteten CH₄ nicht umgewandelt werden, hat das Synthesegas am Ausgang 15 einen CH₄-Anteil von 2,5 mol%. Der Fachmann kann den entsprechenden Anteil des nicht aufgespaltenen Kohlenwasserstoff-Fluids gemäß entsprechenden Berechnung auch für andere Kohlenwasserstoff-Fluide berechnen, z.B. falls das eingeleitete Kohlenwasserstoff-Fluid Erdgas ist und Anteile von weiteren Gasen (z.B. Ethan, Propan, Buthan, Ethen usw.) aufweist.

Beim Betrieb der Vorrichtung aus Fig. 2, die sowohl die zweiten Einlässe 6 als auch die dritten Einlässe 8 aufweist, wird CO₂ durch die zweiten Einlässe 6 eingeleitet, und H₂O wird durch die dritten Einlässe 8 eingeleitet und jeweils mit dem Aerosol aus C-Partikeln und H₂ bzw. CO/H₂ vermischt. Im Verlauf des Strömungsweges vom Brennerteil 11 bis zum Ausgang 15 kommt es zu einer Verringerung der Temperatur von ca. 1000°C. Durch die zweiten Einlässe 6 wird weniger CO₂ eingeleitet als zur vollständigen Umwandlung der C-Partikel in CO notwendig wäre. Es wird so viel CO₂ eingeleitet, dass ungefähr 25 bis 40%, vorzugsweise ein Drittel der Masse eines C-Partikels in CO umgewandelt wird. Bei der Umwandlung von C und CO₂ in CO (Boudouard-Reaktion) kömmt es zu einer Verringerung der Temperatur von ca. 500°C (50% der gesamten Temperaturverringerung). Da die C-Partikel im Bereich der Einleitung von CO₂ kleiner sind als bei dem bekannten Plasmareaktor der Fig. 4 (ca. 350 nm), bleibt das Aerosol aus C-Partikeln, CO, H₂ und restlichem Kohlenwasserstoff-Fluid trotz der starken Temperaturverringerung von ca. 500°C stabil. Durch die dritten Einlässe 8 wird so viel H₂O eingeleitet, dass der Rest (75 bis 60%, vorzugsweise zwei Drittel) der C-Partikel in CO umgewandelt wird (hetWSR bzw. heterogene Watergas-Shift-Reaktion: C + H₂O -> CO + H₂). Dabei kommt es zu einer weiteren Verringerung der Temperatur von ca. 500°C. Dadurch wird eine geringere Temperatur am Ausgang 15 erreicht als im Betrieb der Vorrichtung in Fig. 1.

Der Betrieb der Vorrichtung gemäß Fig. 3 läuft im Wesentlichen genauso ab, wie oben für Fig. 2 beschrieben. Anders als in Fig. 2 läuft das Kohlenwasserstoff-Fluid nicht am Plasmabrenner 7 entlang sondern daran vorbei. Das Plasmagas wird mit einem solchen Druck und mit einer solchen Flussrate zum Plasmabrenner 7 geliefert, dass das Plasma 13 in den Reaktorraum 2 geblasen wird. Der Druck des eingeleiteten Plasmagases ist vorzugsweise höher als der Druck des eingeleiteten Kohlenwasserstoff-Fluids.

Bei allen Vorrichtungen gemäß Fig. 1 bis 3 gelten folgende Merkmale unabhängig voneinander: Die Einleitung von CO₂ oder H₂O durch den oder die zweiten Einlässe 6 kann basierend auf einer gemessenen Temperatur erfolgen. Die Messung der Temperatur kann alternativ zu dem oben erwähnten Verfahren mit Messung des Anteils des restlichen Kohlenwasserstoff-Fluids verwendet werden oder kann zusätzlich verwendet werden, um die Genauigkeit zu verbessern. Der Druck im Reaktorraum 2 wird auf 10 bis 25 bar eingestellt. Der Plasmabrenner 7 befindet sich in einem Fall im Wesentlichen innerhalb der Reaktorkammer 2. Alternativ befindet sich der Plasmabrenner 7 außerhalb der Reaktorkammer 2, und das durch den Plasmabrenner 7 erhitzte Plasmagas strömt im Betrieb über eine Leitung in die Reaktionskammer 2. Der oder die zweiten Einlässe befinden sich an einer Stelle 0-3 m und vorzugsweise an einer Stelle 0-1 m stromabwärts des Ortes, an dem mindestens 90% des Kohlenwasserstoff-Fluids zu C-Partikeln und Wasserstoff zersetzt sind. Daher findet das Vermischen mit CO₂ oder H₂O an einer Stelle 0-3 m und vorzugsweise an einer Stelle 0-1 m stromabwärts des Ortes statt, an dem mindestens 90% des Kohlenwasserstoff Fluids zu C-Partikeln und Wasserstoff zersetzt sind. Der Schritt des Vermischens mit CO₂ oder H₂O beginnt in einem Bereich der Reaktorkammer, in dem die Kohlenstoffpartikel eine Größe von kleiner gleich 250 nm, vorzugsweise von kleiner gleich 200 nm und besonders bevorzugt von kleiner gleich 100 nm im Durchmesser aufweisen. Es wird sowohl CO₂ als auch H₂O in die Reaktorkammer 2 geleitet, und das Einleiten von CO₂ und das Einleiten von H₂O erfolgen getrennt voneinander und hintereinander.

Zusammenfassend lässt sich sagen, dass bei der hier beschriebenen Vorrichtung und dem Verfahren folgende Vorteile erreicht werden können: Vermeidung von Ablagerungen von C-Partikeln; stabiles Aerosol auch bei starker Temperaturverringerung; schnelle Umwandlung und verringerte Reaktionszeit; im Vergleich zum Stand der Technik geringere Temperatur des erzeugten Synthesegases.

Die Erfindung wurde anhand bevorzugter Ausführungsbeispiele beschrieben, wobei die einzelnen Merkmale der beschriebenen Ausführungsbeispiele frei miteinander kombiniert werden können und/oder ausgetauscht werden können, sofern sie kompatibel sind. Ebenso können einzelne Merkmale der beschriebenen Ausführungsbeispiele weggelassen werden, sofern sie nicht zwingend notwendig sind. Dem Fachmann sind Abwandlungen und Ausgestaltungen gemäß dem Wortlaut der folgenden Ansprüche möglich.

## Patentansprüche

1. Vorrichtung zum Erzeugen von Synthesegas, die Folgendes aufweist:
einen Reaktor (1) mit einer Reaktorkammer (2), die wenigstens einen ersten Einlass (5) in Verbindung mit einer Quelle für Kohlenwasserstoff-Fluid und wenigstens einen Auslass (15) aufweist;
einen Plasmabrenner (7) mit einen Brennerteil (11), der zum Erzeugen eines Plasmas ausgebildet ist;
wenigstens einen zweiten Einlass (6) in Verbindung mit einer Quelle für CO₂ oder H₂O;
wobei die Reaktorkammer (2) einen Strömungsweg vom ersten Einlass (5) zum Auslass (15) definiert, wobei der Brennerteil (11) bezüglich des Strömungswegs zwischen dem ersten Einlass (5) für Kohlenwasserstoff-Fluid und dem zweiten Einlass (6) für CO₂ oder H₂O angeordnet ist; und
wobei der zweite Einlass (6) bezüglich des Strömungswegs so angeordnet ist, dass er sich an einem Ort befindet, an dem zwischen 90% und 95% des Kohlenwasserstoff-Fluids thermisch zersetzt sind.

2. Vorrichtung nach Anspruch 1, wobei der zweite Einlass (6) näher am Brennerteil (11) als am Auslass (15) in die Reaktorkammer mündet.

3. Vorrichtung nach Anspruch 1 oder 2, wobei der zweite Einlass (6) näher am Brennerteil (11) gelegen ist als der erste Einlass (5).

4. Vorrichtung nach einem der vorhergehenden Ansprüche, wobei der zweite Einlass (6) gegen die Richtung des Strömungswegs ausgerichtet ist und zum ersten Einlass (5) hin weist.

5. Vorrichtung nach einem der vorhergehenden Ansprüche, die einen dritten Einlass (8) aufweist, der bezüglich des Strömungswegs weiter vom Brennerteil (11) entfernt ist als der zweite Einlass (6).

6. Vorrichtung nach Anspruch 5, wobei der zweite Einlass (6) mit einer Quelle für CO2 verbunden ist; und
wobei der dritte Einlass (8) mit einer Quelle für H₂O verbunden ist.

7. Vorrichtung nach Anspruch 5 oder 6, wobei sich zwischen dem wenigstens einen zweiten Einlass (6) und dem wenigstens einen dritten Einlass (8) ein Heizelement befindet.

8. Vorrichtung nach einem der vorhergehenden Ansprüche, wobei der Brennerteil (11) einen Plasmagaseinlass in Verbindung mit einer Quelle für Plasmagas und einen Plasmagasauslass aufweist, wobei der Plasmagasauslass in die Reaktorkammer (2) mündet; und
wobei der Einlass (5) für Kohlenwasserstoff-Fluid so zum Einlass für Plasmagas angeordnet ist, dass sich das Kohlenwasserstoff-Fluid und das Plasmagas beim Eintritt in die Reaktionskammer (2) innig miteinander vermischen.

9. Vorrichtung nach einem der vorhergehenden Ansprüche, wobei der Plasmabrenner (7) wenigstens zwei langgestreckte Elektroden aufweist, die jeweils an einem Ende einen Basisteil (9) aufweisen, der an der Reaktorwand (3, 3a, 3b) befestigt ist, und wobei der Brennerteil (11) an dem zum Basisteil entgegengesetzten Ende angeordnet ist und in die Reaktorkammer (2) ragt; oder
wobei der Plasmabrenner (7) außerhalb der Reaktorkammer (2) angeordnet ist und über eine Öffnung in der der Reaktorwand (3, 3a, 3b) mit der Reaktorkammer (2) verbunden ist, wobei der Brennerteil (11) so zu der Öffnung hin ausgerichtet ist, dass das Plasmagas in die Reaktionskammer (2) geleitet wird.

10. Verfahren zum Erzeugen von Synthesegas, das folgende Schritte aufweist:
Einleiten eines Kohlenwasserstoff-Fluids in eine Reaktorkammer (2), die wenigstens einen ersten Einlass (5) für Kohlenwasserstoff-Fluid und wenigstens einen Auslass (15) aufweist;
Erzeugen einer Fluidströmung vom Einlass (5) zum Auslass (15);
Aufspalten des Kohlenwasserstoff-Fluids in Kohlenstoffpartikel und Wasserstoff mit Hilfe eines Plasmabrenners (7), der zwischen dem Einlass (5) und dem Auslass (15) liegt; und
Vermischen der Kohlenstoffpartikel und des Wasserstoffes mit CO₂ oder H₂O in einem Bereich in der Reaktorkammer (2) wo zwischen 90% und 95% des Kohlenwasserstoff-Fluids thermisch zersetzt sind.

11. Verfahren nach Anspruch 10, wobei der Schritt des Vermischens mit CO₂ oder H₂O bezüglich der Fluidströmung nach dem Plasmabrenner (7) in einem Bereich der Reaktorkammer (2) erfolgt, wo die Kohlenstoffpartikel eine Größe von kleiner gleich 250 nm und vorzugsweise von kleiner gleich 100 nm haben.

12. Verfahren nach Anspruch 10 oder 11, wobei der Schritt des Vermischens mit CO₂ oder H₂O bezüglich der Fluidströmung nach dem Plasmabrenner (7) in einem Bereich der Reaktorkammer (2) erfolgt, wo eine Temperatur von 1550 bis 1800°C herrscht.

13. Verfahren nach einem der Ansprüche 10 bis 12, wobei das Vermischen mit CO₂ und das Vermischen mit H₂O getrennt voneinander und bezüglich der Fluidströmung hintereinander erfolgen.

14. Verfahren nach einem der Ansprüche 10 bis 13, wobei der Druck im Reaktorraum (2) auf 10 bis 25 bar eingestellt wird.

15. Verfahren nach einem der Ansprüche 10 bis 14, wobei die Einleitung von CO₂ oder H₂O abhängig von Anzahl, Größe, Position und Ausrichtung der zweiten Einlässe (6) relativ zum Brennerteil (11) sowie den Betriebsparametern Druck und eingeleitete Masse pro Zeit so variiert werden, dass das Synthesegas im Bereich des Auslasses (15) einen Anteil von restlichem oder nicht zersetztem Kohlenwasserstoff-Fluid im Bereich von 1,25 bis 2,5 mol% aufweist.

## Claims

1. Apparatus for producing synthesis gas which comprises:
a reactor (1) having a reactor chamber (2) which comprises at least one first inlet (5) connected to a source of hydrocarbon fluid and at least one outlet (15);
a plasma burner (7) having a burner part (11) adapted to generate a plasma;
at least one second inlet (6) connected to a source of CO₂ or H₂O;
wherein the reactor chamber (2) defines a flow path from the first inlet (5) to the outlet (15), wherein the burner part (11) is located, with respect to the flow path, between the first inlet (5) for hydrocarbon fluid and the second inlet (6) for CO₂ or H₂O; and
wherein the second inlet (6) is located, with respect to the flow path, such that the second inlet is at a location where between 90 % and 95 % of the hydrocarbon fluid thermally is decomposed.

2. Apparatus according to claim 1, wherein the second inlet (6) opens into the reactor chamber closer to the burner part (11) than to the outlet (15).

3. Apparatus according to claim 1 or 2, wherein the second inlet (6) is located closer to the burner part (11) than the first inlet (5).

4. Apparatus according to one of the previous claims, wherein the second inlet (6) is oriented against the direction of the flow path and is oriented towards the first inlet (5).

5. Apparatus according to one of the previous claims, which comprises a third inlet (8) which is, with respect to the flow path, further away from the burner part (11) than the second inlet (6).

6. Apparatus according to claim 5, wherein the second inlet (6) is connected to a source of CO₂: and
wherein the third inlet (8) is connected to a source of H₂O.

7. Apparatus according to claim 5 or 6, wherein a heating element is located between the at least one second inlet (6) and the at least one third inlet (8).

8. Apparatus according to one of the previous claims, wherein the burner part (11) comprises a plasma gas inlet connected to a source of plasma gas and a plasma gas outlet, wherein the plasma gas outlet opens into the reactor chamber (2); and
wherein the inlet (5) of the hydrocarbon fluid is oriented towards the inlet for plasma gas, such that the hydrocarbon fluid and the plasma gas mix closely when entering into the reaction chamber (2).

9. Apparatus according to one of the preceding claims, wherein the plasma burner (7) comprises at least two elongated electrodes, wherein each thereof has a base part (9) at one end, the base part being mounted to the reactor wall (3, 3a, 3b), and wherein the burner part (11) is located at the end opposite to the base part and extends into the reactor chamber (2); or wherein the plasma burner (7) is located outside the reactor chamber (2) and is connected to the reactor chamber (2) via an opening in the reactor wall (3, 3a, 3b), wherein the burner part (11) is oriented towards the opening such that the plasma gas is directed into the reaction chamber (2).

10. Method for producing synthesis gas comprising the following steps:
supplying a hydrocarbon fluid into a reaction chamber (2) which comprises at least one inlet (5) for hydrocarbon fluid and at least one outlet (15);
generating a fluid flow from the inlet (5) to the outlet (15);
decomposing the hydrocarbon fluid into carbon particles and hydrogen with the aid of a plasma burner (7) which is located between the inlet (5) and the outlet (15); and
mixing the carbon particles and the hydrogen with CO₂ or H₂O in a region of the reactor chamber (2) where between 90 % and 95 % of the hydrocarbon fluid is thermally decomposed.

11. Method according to claim 10, wherein the step of mixing the CO₂ or H₂O is carried out, with respect to the fluid flow, after the plasma burner (7) in a region of the reactor chamber (2) where the carbon particles have a size of equal to or less than 250 nm and preferably of equal to or less than 100 nm.

12. Method according to claim 10 or 11, wherein the step of mixing with CO₂ or H₂O is carried out, with respect to the fluid flow, after the plasma burner (7) in a region of the reactor chamber (2) where a temperature of 1550 to 1800 °C prevails.

13. Method according to one of claims 10 to 12, wherein the steps of mixing with CO₂ and mixing with H₂O are carried out separately and one after another with respect to the fluid flow.

14. Method according to one of claims 10 to 13, wherein the pressure in the reactor chamber (2) is set to be between 10 to 25 bar.

15. Method according to one of claims 10 to 14, wherein the supply of CO₂ or H₂O is varied depending on the number, size, position, and orientation of the second inlets (6) relative to the burner part (11) and depending on the operation parameters pressure and supplied mass per time,
such that the synthesis gas has an amount of residual or not decomposed hydrocarbon fluid in a range of 1.25 to 2.5 mol-% in the region of the outlet (15).

## Revendications

1. Appareil pour produire des gaz de synthèse qui comprend :
un réacteur (1) ayant une chambre de réaction (2) qui comprend au moins une première admission (5) connectée à une source de fluide d'hydrocarbure et au moins un échappement (15) ;
une torche à plasma (7) ayant une partie de torche (11) adaptée à générer un plasma ;
au moins une deuxième admission (6) connectée à une source de CO₂ ou de H₂O ;
dans lequel la chambre de réaction (2) définit un trajet d'écoulement depuis la première admission (5) vers l'échappement (15), dans lequel la partie de torche (11) est située, par rapport au trajet d'écoulement, entre la première admission (5) de fluide d'hydrocarbure et la deuxième admission (6) de CO₂ ou de H₂O ; et
dans lequel la deuxième admission (6) est située, par rapport au trajet d'écoulement, de sorte que la deuxième admission est à un emplacement auquel entre 90 % et 95 % du fluide d'hydrocarbure est thermiquement décomposé.

2. Appareil selon la revendication 1, dans lequel la deuxième admission (6) débouche dans la chambre de réaction plus près de la partie de torche (11) que de l'échappement (15).

3. Appareil selon la revendication 1 ou 2, dans lequel la deuxième admission (6) est située plus près de la partie de torche (11) que de la première admission (5).

4. Appareil selon l'une quelconque des revendications précédentes, dans lequel la deuxième admission (6) est orientée à l'opposé de la direction du trajet d'écoulement et est orientée vers la première admission (5).

5. Appareil selon l'une quelconque des revendications précédentes, comprenant une troisième admission (8) qui est, par rapport au trajet d'écoulement, plus loin de la partie de torche (11) que de la deuxième admission (6).

6. Appareil selon la revendication 5, dans lequel la deuxième admission (6) est connectée à une source de CO₂ ; et
dans lequel la troisième admission (8) est connectée à une source de H₂O.

7. Appareil selon la revendication 5 ou 6, dans lequel un élément chauffant est situé entre ladite au moins une deuxième admission (6) et ladite au moins une troisième admission (8).

8. Appareil selon l'une quelconque des revendications précédentes, dans lequel la partie de torche (11) comprend une admission de gaz plasma connectée à une source du gaz plasma et un échappement de gaz plasma, dans lequel l'échappement de gaz plasma débouche dans la chambre de réaction (2) ; et
dans lequel l'admission (5) de fluide d'hydrocarbure est orientée vers l'admission de gaz plasma, de sorte que le fluide d'hydrocarbure et le gaz plasma se mélangent étroitement lors de leur entrée dans la chambre de réaction (2).

9. Appareil selon l'une quelconque des revendications précédentes, dans lequel la torche à plasma (7) comprend au moins deux électrodes allongées, dans lequel chacune de celles-ci a une partie de base (9) au niveau d'une extrémité, la partie de base étant montée sur la paroi de réacteur (3, 3a, 3b), et dans lequel la partie de torche (11) est située au niveau de l'extrémité opposé à la partie de base et s'étend dans la chambre de réaction (2) ; ou
dans lequel la torche à plasma (7) est située en-dehors de la chambre de réaction (2) et est connectée à la chambre de réaction (2) via une ouverture dans la paroi du réacteur (3, 3a, 3b), dans lequel la partie de torche (11) est orientée vers l'ouverture de sorte que le gaz plasma est dirigé vers la chambre de réaction (2).

10. Procédé de production de gaz de synthèse comprenant les étapes suivantes :
la fourniture d'un fluide d'hydrocarbure dans une chambre de réaction (2) qui comprend au moins une admission (5) pour le fluide d'hydrocarbure et au moins un échappement (15) ;
la génération d'un écoulement fluide depuis l'admission (5) vers l'échappement (15) ;
la décomposition de fluide d'hydrocarbure en des particules de carbone et de l'hydrogène avec l'aide d'une torche à plasma (7) qui est située entre l'admission (5) et l'échappement (15) ; et
le mélange des particules de carbone et de l'hydrogène avec du CO₂ et de l'H₂O dans une zone de la chambre de réaction (2) où entre 90 % et 95 % du fluide d'hydrocarbure est décomposé thermiquement.

11. Procédé selon la revendication 10, dans lequel l'étape de mélange avec CO₂ ou avec H₂O est mise en œuvre, par rapport à l'écoulement fluide, après la torche à plasma (7) dans une zone de la chambre de réaction (2) où les particules de carbone ont une taille égale ou inférieure à 250 nm et, de préférence, égale ou inférieure à 100 nm.

12. Procédé selon la revendication 10 ou 11, dans lequel l'étape de mélange avec CO₂ ou avec H₂O est mise en œuvre, par rapport à l'écoulement fluide, après la torche à plasma (7) dans une zone de la chambre de réaction (2) où une température de 1 550 à 1 800 °C prévaut.

13. Procédé selon l'une quelconque des revendications 10 à 12, dans lequel le mélange avec CO₂ et le mélange avec H₂O sont mis en œuvre séparément et l'un après l'autre, par rapport à l'écoulement fluide.

14. Procédé selon l'une quelconque des revendications 10 à 13, dans lequel la pression dans la chambre de réaction (2) est fixée entre 10 et 25 bar.

15. Procédé selon l'une quelconque des revendications 10 à 14, dans lequel la fourniture en CO₂ ou en H₂O est modifiée en fonction du nombre, de la taille, de la position, et de l'orientation des deuxièmes admissions (6) par rapport à la partie de torche (11) et en fonction de paramètres de fonctionnement de pression et de masse fournie en fonction du temps,
de sorte que le gaz de synthèse a une quantité de fluide d'hydrocarbure résiduelle ou non décomposée dans une plage de 1,25 à 2,5 mol % dans la région de l'échappement (15).
